# FASCICULE DE BREVET EUROPEEN

(11) **EP 1 150 404 B1**
(45) Date de publication et mention de la délivrance du brevet: **04.06.2008**
(21) Numéro de dépôt: 01401035.9
(22) Date de dépôt: 24.04.2001
(51) Int. Cl.: H02B 1/30

(54) **Enveloppe pour appareils électriques comportant une plaque passe-câbles**
Gehäuse für elektrische Geräte mit Kabeldurchführung
Housing for electrical devices having a cable feedthrough

(30) Priorité: 27.04.2000 FR 0005554
(43) Date de publication de la demande: 31.10.2001
(73) Titulaire: Hispano Mecano Electrica S.A., 08786 Capellades (Barcelona) (ES)
(72) Inventeur: Salvador Moreno, José, 08840 Viladecans (Barcelona) (ES); Borrega Saumell, Carles, 08710 Santa Margarida-Anoia (Barcelona) (ES)
(74) Mandataire: Carias, Alain

(56) Documents cités:
- WO-A-89/05533
- DE-U- 29 521 087

## Description

La présente invention concerne une enveloppe pour appareils électriques comportant dans une paroi une ouverture passe-câbles et une plaque passe-câbles susceptible d'être fixée de manière amovible sur le bord de l'ouverture pour obturer celle-ci; au moyen d'organes de serrage logés dans des orifices du bord de l'ouverture, avec interposition d'un joint périphérique d'étanchéité. (voir WO-A-89/05533).

Il est bien connu de prévoir des plaques passe-câbles pour obture de façon étanche une telle ouverture dans un coffret pour appareillages électriques. Il apparaît souhaitable de renforcer l'étanchéité de l'obturation tout en utilisant des moyens de fixation simples.

L'invention a pour but de simplifier la fixation d'une plaque passe-câbles pour enveloppe d'appareils électriques et d'assurer une étanchéité satisfaisante.

Selon l'invention, chaque organe de serrage peut passer par pivotement angulaire limité d'une position de repos à une position de serrage et vice versa, et coopère avec le bord de l'ouverture pour produire lors du pivotement angulaire vers la position de serrage une mise en pression du joint d'étanchéité. On entend par "pivotement angulaire limité" un pivotement inférieur à un demi-tour.

De préférence, chaque organe de serrage est du type quart de tour et présente au moins un ergot radial qui coopère avec le côté du bord de l'ouverture qui est situé vers l'intérieur de l'enveloppe, l'organe de serrage traversant une fente transversale de la plaque et une fente transversale située sur le bord de l'ouverture. Les fentes sont orientées de manière à laisser passer l'organe de serrage dans sa position de repos et à bloquer ses ergots en position de serrage. La fente transversale située sur le bord de l'ouverture est avantageusement ménagée dans une nervure prévue en saillie le long d'un côté respectif du bord, cette nervure ayant une fonction de raidissement et de maintien des ergots en position de serrage.

La description va être faite ci-après d'un mode de réalisation non limitatif de l'invention, en regard des dessins annexés.

La figure 1 représente en perspective un coffret conforme à l'invention.
La figure 2 montre en perspective éclatée la plaque passe-câbles du coffret de la figure 1.
Les figures 3 et 4 représentent en coupe à plus grande échelle une zone de serrage respectivement avant et après serrage.

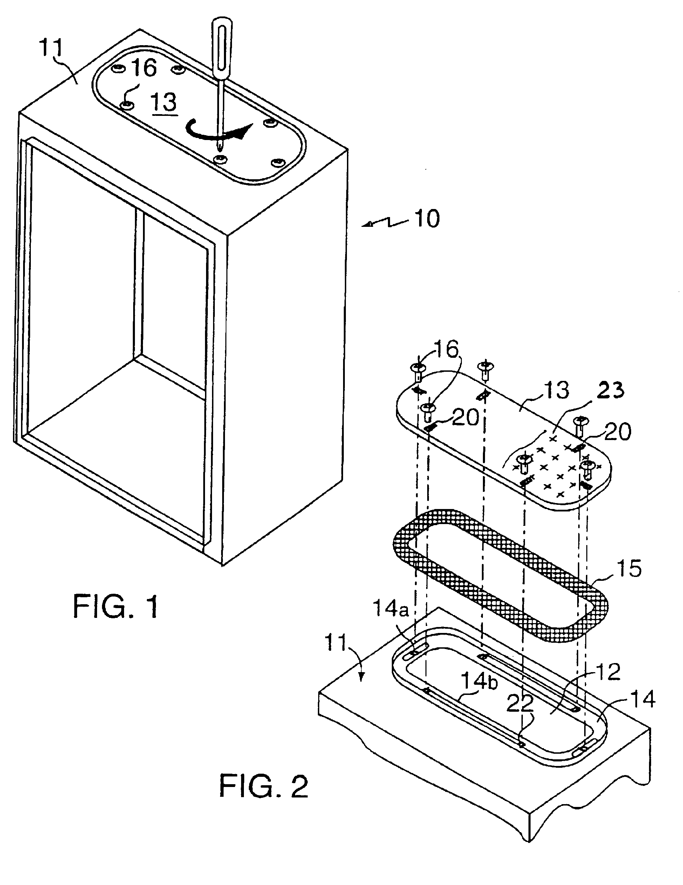

L'enveloppe illustrée sur la figure 1 est un coffret 10 ou autre dispositif analogue apte à recevoir des appareils électriques, ainsi que les organes de support et les câblages de ces appareils. Le coffret est par exemple de forme prismatique. Le passage de câbles depuis l'extérieur ou vers l'extérieur s'effectue dans une paroi plane 11 du coffret au moyen d'une ouverture 12 de dimensions adéquates, cette ouverture étant obturable par une plaque passe-câbles démontable 13, de forme adaptée à celle de l'ouverture. La plaque est posée sur le bord 14 de l'ouverture 12, ce bord étant, vu de l'extérieur de l'enveloppe, en retrait par rapport à la paroi 11 et formant une plage apte à recevoir un joint périphérique d'étanchéité 15.

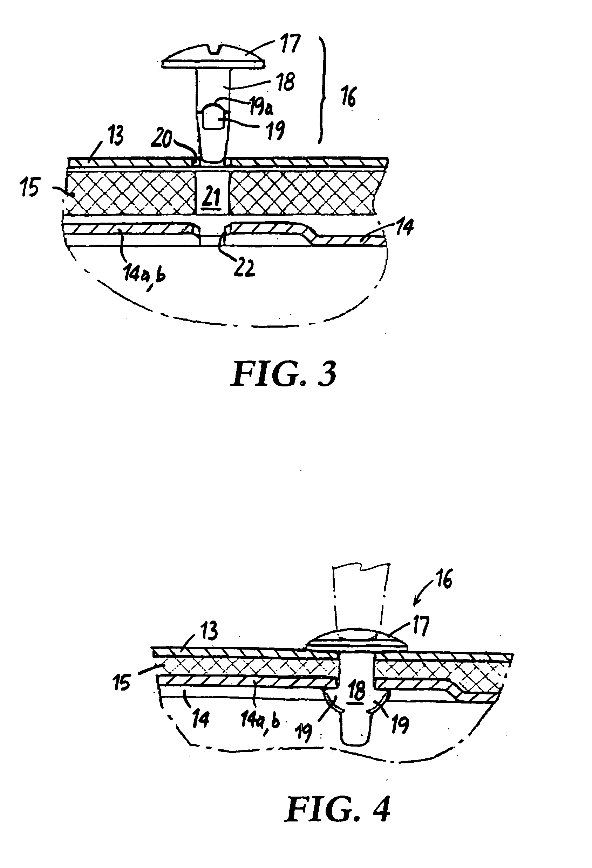

Plusieurs organes de serrage 16 sont associés à la plaque 13 pour la fixer en comprimant le joint 15. La plaque ayant une forme sensiblement rectangulaire, il est prévu un organe 16 sur chacun de ses petits côtés et deux organes 16 sur chacun de ses grands côtés. Chaque organe de serrage 16 ressemble à une vis sans toutefois être fileté ; il comprend une tête 17 et une queue 18 présentant deux ergots radiaux 19, de façon à offrir un profil étroit (figure 3) et un profil large (figure 4), en fonction de la position en rotation autour de son propre axe. La partie 19a de chaque ergot située du côté de la tête 17 de l'organe 16 est convexe ou doté d'une rampe de façon à faciliter son pivotement.

La queue 18 de l'organe 16 traverse une fente 20 ménagée sur un bord de la plaque 13, un orifice 21 du joint 15 et une fente 22 ménagée dans une forme de raidissement, par exemple une nervure ou gorge, ménagée en saillie vers l'extérieur de l'enveloppe sur le bord 14 de l'ouverture 12. Les fentes 20 et 22 sont transversales, c'est-à-dire sont perpendiculaires à la direction du côté associé du bord 14 ou de la petite nervure 14a ou grande nervure 14b et permettent d'indexer la position de la vis avant serrage (voir figure 3). Un quadrillage 23 est prévu pour être apparent sur la plaque 13. Ce quadrillage est formé par un ensemble de croix constituées chacune de quatre tirets emboutis et d'un point central, ainsi qu'il est indiqué sur la figure 1. Le quadrillage embouti 23 a pour but de faciliter le traçage en vue d'un usinage de la plaque par l'opérateur.

Pour obtenir le serrage de la plaque lorsqu'elle a été posée sur le bord 14, on introduit les organes 16 dans les fentes 20,21 et 22 avec les ergots orientés dans le sens de la longueur des fentes 20, 22, c'est-à-dire transversalement à la longueur du côté respectif de la plaque. On appuie avec un tournevis sur l'organe 16 de façon à mettre le joint 15 en pression, et à faire en sorte que les ergots 19 viennent en dessous du verso de la nervure 14a (du côté intérieur de l'enveloppe), puis on fait pivoter l'organe 16 avec le tournevis d'un quart de tour dans l'un ou l'autre sens de manière à amener les ergots dans la position de la figure 4. Les ergots prennent alors appui sur le verso de la nervure 14a,14b en se logeant le long de celle-ci et conservent une bonne mise en pression du joint 15. L'étanchéité ainsi réalisée est très satisfaisante.

## Revendications

1. Enveloppe pour appareils électriques comportant dans une paroi une ouverture passe-câbles (12) et une plaque passe-câbles (13) susceptible d'être fixée sur le bord de l'ouverture pour obturer celle-ci; au moyen d'organes de serrage logés dans des orifices du bord de l'ouverture, avec interposition d'un joint périphérique d'étanchéité (15),
***caractérisée par le fait que* :**
- chaque organe de serrage (16) peut passer par pivotement angulaire limité d'une position de repos à une position de serrage et vice versa,
- l'organe de serrage (16) coopère avec le bord (14) de l'ouverture (12) pour produire lors du pivotement angulaire vers la position de serrage une mise en pression du joint d'étanchéité (15).

2. Enveloppe selon la revendication 1, **caractérisée par le fait que** chaque organe de serrage (16) est du type quart de tour et présente au moins un ergot radial (19) qui coopère avec le côté du bord (14) de l'ouverture (12) qui est situé vers l'intérieur de l'enveloppe.

3. Enveloppe selon la revendication 2, **caractérisée par le fait que** l'organe de serrage (16) traverse une fente transversale (20) de la plaque (13) et une fente transversale (22) située sur le bord (14) de l'ouverture (12).

4. Enveloppe selon la revendication 2, **caractérisée par le fait que** chaque ergot (19) se loge en position de serrage dans le sens de la longueur d'une nervure (14a) prévue en saillie le long d'un côté respectif du bord (14) de l'ouverture(12).

5. Enveloppe selon la revendication 2, **caractérisée par le fait que** chaque ergot radial (19) est doté d'une rampe.

6. Enveloppe selon la revendication 1, **caractérisé par le fait que** la plaque passe-câbles (13) présente un quadrillage embouti (23) d'aide au traçage.

## Claims

1. Casing for electrical devices comprising in one wall a cable-passage opening (12) and a cable-passage plate (13) able to be fixed on the edge of the opening in order to obturate the latter using clamping devices lodged in orifices at the edge of the opening, with the interposition of a peripheral seal (15), **characterized in that**:
- each clamping device (16) can move by limited turning from a position of rest to a clamping position and vice-versa,
- the clamping device (16) cooperates with the edge (14) of the opening (12) in order to produce an application of pressure on the seal (15) during the turning towards the clamping position.

2. Casing according to Claim 1, **characterized in that** each clamping device (16) is of the quarter-turn type and has at least one radial pin (19) which cooperates with the side of the edge (14) of the opening (12) which is situated towards the inside of the casing.

3. Casing according to Claim 2, **characterized in that** the clamping device (16) passes through a transverse slot (20) of the plate (13) and a transverse slot (22) situated on the edge (14) of the opening (12).

4. Casing according to Claim 2, **characterized in that** each pin (19) is lodged, in the clamping position, in the direction of the length of a rib (14a) which protrudes along a respective side of the edge (14) of the opening (12).

5. Casing according to Claim 2, **characterized in that** each radial pin (19) is provided with a ramp.

6. Casing according to Claim 1, **characterized in that** the cable-passage plate (13) has a stamped marking-out aid grid (23).

## Patentansprüche

1. Gehäuse für Elektrogeräte, das in einer Wand eine Kabeldurchführungsöffnung (12) und eine Kabeldurchführungsplatte (13) aufweist, die auf dem Rand der Öffnung befestigt werden kann, um diese zu verschließen; mittels Klemmorganen, die in Öffnungen des Rands der Öffnung eingesetzt sind, mit Zwischenfügung einer Umfangsdichtung (15),
**dadurch gekennzeichnet, dass**
- jedes Klemmorgan (16) durch begrenztes winkelmäßiges Schwenken von einer Ruhestellung in eine Klemmstellung und umgekehrt übergehen kann,
- das Klemmorgan (16) mit dem Rand (14) der Öffnung (12) zusammenwirkt, um beim winkelmäßigen Schwenken in die Klemmstellung eine Druckbeaufschlagung der Dichtung (15) zu erzeugen.

2. Gehäuse nach Anspruch 1, **dadurch gekennzeichnet, dass** jedes Klemmorgan (16) vom Typ Vierteldrehung ist und mindestens einen radialen Zapfen (19) aufweist, der mit der Seite des Rands (14) der Öffnung (12) zusammenwirkt, die sich zum Inneren des Gehäuses befindet.

3. Gehäuse nach Anspruch 2, **dadurch gekennzeichnet, dass** das Klemmorgan (16) einen Querschlitz (20) der Platte (13) und einen Querschlitz (22) durchquert, der sich auf dem Rand (14) der Öffnung (12) befindet.

4. Gehäuse nach Anspruch 2, **dadurch gekennzeichnet, dass** jeder Zapfen (19) sich in der Klemmstellung in Längsrichtung einer Rippe (14a) anordnet, die vorstehend entlang einer jeweiligen Seite des Rands (14) der Öffnung (12) vorgesehen ist.

5. Gehäuse nach Anspruch 2, **dadurch gekennzeichnet, dass** jeder radiale Zapfen (19) mit einer Rampe versehen ist.

6. Gehäuse nach Anspruch 1, **dadurch gekennzeichnet, dass** die Kabeldurchführungsplatte (13) ein tiefgezogenes Raster (23) zur Unterstützung des Anzeichnens aufweist.
